**Europäisches Patentamt**

**European Patent Office**

**Office européen des brevets**

(19)

(11) Veröffentlichungsnummer : **0 377 771 B1**

(12) **EUROPÄISCHE PATENTSCHRIFT**

(45) Veröffentlichungstag der Patentschrift :
**05.04.95 Patentblatt 95/14**

(51) Int. Cl.⁶ : **H02P 5/40**

(21) Anmeldenummer : **89100599.3**

(22) Anmeldetag : **13.01.89**

(54) **Verfahren zur Regelung des Drehmomentverhaltens von mehrphasigen, elektronisch kommutierten Elektromotoren, insbesondere von Sychronmotoren.**

(43) Veröffentlichungstag der Anmeldung :
**18.07.90 Patentblatt 90/29**

(45) Bekanntmachung des Hinweises auf die
Patenterteilung :
**05.04.95 Patentblatt 95/14**

(84) Benannte Vertragsstaaten :
**CH DE IT LI NL SE**

(56) Entgegenhaltungen :
**EP-A- 0 065 614**
**EP-A- 0 191 005**
**EP-A- 0 208 847**
**EP-A- 0 313 929**

(73) Patentinhaber : **SIEMENS**
**AKTIENGESELLSCHAFT**
**Wittelsbacherplatz 2**
**D-80333 München (DE)**

(72) Erfinder : **Brune, Richard, Dipl.-Ing.**
**Sonneberger Strasse 38**
**D-8510 Fürth (DE)**
Erfinder : **Rochholz, Günter, Dipl.-Ing.**
**Lachnerstrasse 79**
**D-8520 Erlangen (DE)**
Erfinder : **Papiernik, Wolfgang, Dr.**
**Eskilstunastrasse 9**
**D-8520 Erlangen (DE)**

## Beschreibung

Die Erfindung betrifft ein Verfahren zur Regelung des Drehmomentverhaltens von mehrphasigen, elektronisch kommutierten Elektromotoren, insbesondere von Synchronmotoren mit Rotorlagegebern, wobei das Drehmoment des Elektromotors über mindestens einen vorgebbaren Stromsollwert steuerbar ist, wobei ein jeweiliger Stromsollwert aus einer Drehmomentregelgröße abgeleitet wird.

Synchronmotoren oder Synchronmaschinen eignen sich besonders zur Erzeugung eines vorgegebenen Drehmomentverlaufs. Mit einer trapezförmigen elektromotorischen Kraft läßt sich bei Speisung mit blockförmigen Strömen ein konstantes Drehmoment der Synchronmaschine erzeugen. Die blockförmigen Ströme werden dabei in einem Stromrichter nach vorangegangener Pulsbreitenmodulation mit Hilfe einer Impulsverteilungsschaltung rotorlageabhängig erzeugt, wobei ein umlaufendes elektromagnetisches Feld in der Maschine entsteht. Aufgrund des nichtidealen konstruktiven Aufbaus der Synchronmaschine - Spalten in den Wicklungen, Nutwelligkeit, fertigungsbedingte Toleranzen, z.B. beim Aufkleben von Permanentmagneten, etc. - weicht der resultierende Drehmomentverlauf vom Soll-Drehmomentverlauf ab. Zusätzlich ergeben sich durch die gesteuerte Stromvorgabe und die unterschiedlich langen Zeitvorgänge für die Auf- und Abkommutierung systembedingte Drehmomenteinbrüche.

In der deutschen Patentanmeldung mit dem amtlichen Aktenzeichen P 37 36 213.5 ist bereits ein Verfahren zur Vermeidung eines Stromeinbruchs in einem nicht an der Kommutierung beteiligten Strang einer dreiphasigen, blockstromgespeisten Synchronmaschine vorgeschlagen, wobei pulsbreitenmodulierte Impulse für den Stromrichter der Synchronmaschine mittels einer hochfrequenten, dreieckförmigen Abtastspannung und einer Steuerspannung erzeugt werden. Dabei wird durch eine Kommutierungsvorsteuerung erreicht, daß im Mittel der Stromabstieg im abkommutierenden Strang gleich ist im Mittel dem negativen Stromanstieg im aufkommutierenden Strang. Dieses Verfahren führt bereits zu einer deutlichen Verbesserung des Drehmomentverhaltens. Die Drehmomenteinbrüche können jedoch nur im zeitlichen Mittel und nicht reproduzierbar verringert werden.

Ein Verfahren der eingangs genannten Art ist aus der EP-A-0 191 005 bekannt. Dabei wird das Drehmomentverhalten eines elektronisch kommutierten Elektromotors geregelt, wobei Rotorlagegebern vorgesehen sind und das Drehmoment (Motorstrom) des Elektromotors über mindestens einen vorgebbaren Stromsollwert steuerbar ist. Zu diesem Zweck wird

- für jede zu regelnde Stromphase ein rotorlageabhängiges Signal zur Verfügung gestellt,

- die jeweilige Drehmomentregelgröße mit dem jeweiligen rotorlageabhängigen Signal einer Stromphase verknüpft, wobei ein Stromsollwert für jede Phase gebildet wird,
- aus der Differenz zwischen dem jeweils vorliegenden Stromsollwert und dem Stromistwert von einem jeder Stromphase zugeordneten Stromregler eine Stromregelgröße gebildet.

Ein realer Elektromotor weist allerdings fertigungstechnische Toleranzen auf, die beispielsweise durch Spalten in den Wicklungen, Nutwelligkeit oder Toleranzen, die sich beim Aufkleben von Permanentmagneten ergeben etc. bedingt sind. Diese Toleranzen treten sowohl bei Asynchron- als auch bei Synchronmotoren auf. Angenommen, man würde einem idealen Elektromotor ideale Sollwerte für einen konstanten Drehmomentverlauf vorgeben, so würde der Drehmomentistwertverlauf ebenfalls konstant sein. Der Drehmomentistwertverlauf eines realen Elektromotors wird dagegen Abweichungen aufweisen, da wegen der fertigungstechnischen Toleranzen die magnetische Induktion über den Umfang des Rotors nicht gleichmäßig ist.

Aufgabe der Erfindung ist es, fertigungstechnische Mängel regelungstechnisch zu kompensieren, um einen vorgebbaren Drehmomentverlauf bei der Regelung von Elektromotoren, insbesondere von Synchronmaschinen, zu erzielen.

Diese Aufgabe wird durch folgende Verfahrensschritte gelöst:

a) Für jede zu regelnde Stromphase wird ein rotorlageabhängiges Signal zur Verfügung gestellt,

b) die jeweilige Drehmomentregelgröße wird mit dem jeweiligen rotorlageabhängigen Signal einer Stromphase verknüpft, wobei ein Stromsollwert für jede Stromphase gebildet wird,

c) aus der Differenz zwischen dem jeweils vorliegenden Stromsollwert und dem Stromistwert wird eine Stromregelgröße gebildet,

d) ein jeder Stromphase zugeordneter Stromregler erzeugt eine der jeweiligen Stromregelgröße entsprechende Sollspannung, mit der der Elektromotor über einen Pulsbreitenmodulator steuerbar ist,

e) wobei die rotorlageabhängigen Signale so gewählt sind, daß bei einer jeweiligen Rotorlage bestehende, fertigungstechnisch bedingte Abweichungen vom idealen Drehstromistwertverlauf kompensiert werden.

Dieses von bisherigen Regelungskonzepten abweichende Verfahren, ermöglicht es, für jedes gewünschte vorgebbare Drehmoment in Abhängigkeit von der jeweiligen Rotorlage einen Stromsollwert für jede - mindestens eine - zu regelnde Phase vorzugeben. Damit kann nicht nur bei einer trapezförmigen elektromotorischen Kraft ein konstanter Drehmomentverlauf erzeugt werden, sondern es können für jeden beliebigen elektromotorischen Kraftverlauf die entsprechenden Stromsollwerte zur Bildung eines konstanten Drehmomentverlaufes vorgegeben werden. Durch die Berücksichtigung der Rotorlage bei der Stromsollwertvorgabe lassen sich vorteilhafterweise auch Fertigungstoleranzen baugleicher Elektromotoren, insbesondere Synchronmaschinen, ausgleichend berücksichtigen. Die getrennte Regelung der Phasenströme gewährleistet, daß der aufkommutierende Strom exakt den abkommutierenden ablöst und somit keine systembedingten Drehmomenteinbrüche auftreten.

Die Verknüpfung der jeweiligen Drehmomentregelgröße mit dem jeweiligen rotorlageabhängigen Signal einer Stromphase kann beispielsweise multiplikativ erfolgen. Je nachdem, ob die Drehmomentregelgröße und/oder das jeweilige rotorlageabhängige Signal in analoger oder digitaler Form vorliegen, kann ein Analog-Multiplizierer, ein Digital-Multiplizierer oder ein Digital-Analog-Multiplizierer verwendet werden.

Eine erste Ausgestaltung der Erfindung liegt darin, daß durch das Lösungsprinzip der Erfindung nicht nur die durch die fertigungstechnischen Toleranzen bedingten Rundlaufeigenschaften eines Elektromotors kompensiert werden können, sondern daß gleichzeitig ein vom Anwender gewünschter, beliebiger Drehmomentverlauf vorgegeben werden kann. Dazu ist es lediglich notwendig, daß die jeweiligen Signale bzw. Stromsollwerte einerseits eine Komponente zur Kompensation der fertigungstechnischen Toleranzen, andererseits eine Komponente zur Vorgabe eines gewünschten Drehmomentsollwertverlaufs enthalten. Damit läßt sich bereits schon vor dem Pulsbreitenmodulator ein beliebiger Drehmomentverlauf vorgeben.

Gemäß einer weiteren Ausbildung der Erfindung sind die rotorlageabhängigen Signale in einem Speicher hinterlegbar und durch Anlegen des aktuellen Rotorlagesignals an den Adreßeingang des Speichers auslösbar.

Es ist jedoch auch möglich, die gewünschten, der jeweiligen Rotorlage und der jeweiligen Drehmomentregelgröße entsprechenden Stromsollwert in einem Speicher abzulegen und in Abhängigkeit von der jeweiligen Drehmomentregelgröße und der jeweiligen Rotorlage auszulösen. Dies läßt sich durch folgende Verfahrensschritte erreichen:

a) Der einer jeweiligen Drehmomentregelgröße und der jeweiligen Rotorlage entsprechender Stromsollwert wird für jede zur Regelung vorgesehene Phase jeweils als digitaler Stromsollwert in einem Speicher abgelegt,

b) der jeweilige Stromsollwert für die betreffende Phase wird durch Anlegen der Drehmomentregelgröße sowie des aktuellen Rotorlagesignals an die Adreßeingänge eines Speichers ausgelöst und an den Digitaleingang eines jeweiligen Digital-Analog-Wandlers gegeben,

c) aus der Differenz zwischen dem jeweils vorliegenden Stromsollwert und dem Stromistwert wird eine Stromregelgröße gebildet,

d) ein jeder Stromphase zugeordneter Stromregler erzeugt eine der jeweiligen Stromregelgröße entsprechende Sollspannung, mit der der Elektromotor über einen Pulsbreitenmodulator steuerbar ist,

e) wobei die rotorlageabhängigen Signale so gewählt sind, daß bei einer jeweiligen Rotorlage bestehende, fertigungstechnisch bedingte Abweichungen vom idealen Drehstromistwertverlauf kompensiert werden.

Da bei dieser Ausbildung der Erfindung die Stromsollwerte bereits im Speicher vorliegen, erübrigt sich die Multiplikation von Drehmomentregelgröße und rotorlageabhängigem Signal. Damit entfällt der für die Multiplikation notwendige Zeitaufwand und es entstehen keine Kosten für die entsprechenden Bauteile.

Eine weitere vorteilhafte Ausbildung der Erfindung ist dadurch gekennzeichnet, daß zur Regelung eines dreiphasigen Elektromotors eine Sollspannung aus den beiden anderen Sollspannungen nach der Sternpunktbedingung gebildet wird. Damit läßt sich der Speicherplatzbedarf, die Anzahl der hinterlegbaren Stromsollwerte, der Digital-Analog-Wandler sowie die Anzahl der benötigten Stromregler reduzieren. Selbstverständlich kann diese Maßnahme auch bei der Steuerung von mehrphasigen Elektromotoren angewendet werden, wenn man die entsprechenden physikalischen Gesetzmäßigkeiten heranzieht.

Eine weitere Ausbildung der Erfindung ist dadurch gekennzeichnet, daß zur Regelung eines dreiphasigen Elektromotors die dritte Stromregelgröße aus den jeweils vorliegenden analogen Stromsollwerten und aus den Stromistwerten nach der Sternpunktbedingung gebildet wird. Wenn zur Kompensation von Sicherheitszeiten der Steuertransistoren die Stromsollwerte für zwei Phasen so gewählt werden, daß die Sternpunktbedingung für die drei Leiterströme nicht eingehalten wird, können gemäß dieser vorteilhaften Ausbildung der Erfindung alle drei Ströme geregelt werden. Auch nach diesem Verfahren ist eine Regelung von mehrphasigen Elektromotoren möglich, wenn zur Bildung eines nicht vorgegebenen Stromsollwertes aus den vorgegebenen Stromsollwerten die entsprechenden physikalischen Gesetzmäßigkeiten berücksichtigt werden.

Ein Ausführungsbeispiel der Erfindung ist in der Zeichnung dargestellt und wird im folgenden näher erläutert. Dabei zeigen:

FIG 1 ein Blockschaltbild einer Verknüpfungseinheit zur Bildung von Stromsollwerten,

FIG 2 und FIG 3 jeweils ein Blockschaltbild zur Regelung eines Synchronmotors.

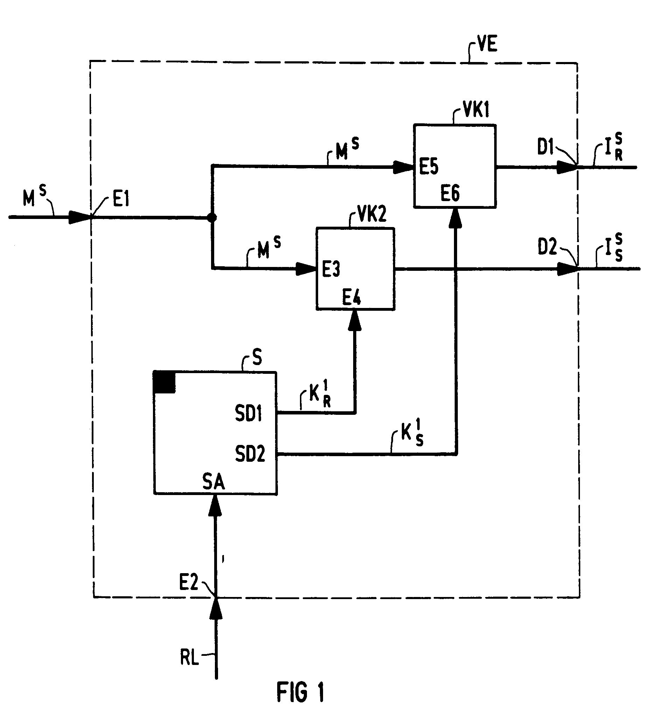

FIG 1 zeigt ein Blockschaltbild einer Verknüpfungseinheit VE zur Bildung von Stromsollwerten $I_R^S$, $I_S^S$. Die Verknüpfungseinheit VE verfügt über zwei Eingänge E1, E2, wobei an den Eingang E1 eine Drehmomentregelgröße $M^S$ und an den Eingang E2 das Rotorlagesignal RL geführt sind. Über den Eingang E1 gelangt die Drehmomentregelgröße $M^S$ gleichzeitig an die Eingänge E3 und E5 der Verknüpfer VK1 und VK2. Das Rotorlagesignal RL gelangt über den Eingang E2 der Verknüpfungseinheit VE an den Adreßeingang SA eines Speichers S. Der Speicher S ist in der linken oberen Ecke durch ein schwarzes Kästchen gekennzeichnet.

Über das Rotorlagesignal RL werden die entsprechenden Speicherplätze des Speichers S adressiert und die jeweiligen rotorlageabhängigen Signale $K_R^1$, $K_S^1$ an die Datenausgänge SD1, SD2 des Speichers S gelegt. Die Größe des zu verwendeten Speichers S hängt von der Anzahl der rotorlageabhängigen Signale $K_R^1$, $K_S^1$ und diese wiederum vom Auflösevermögen eines verwendeten Rotorlagegebers ab. Wenn beispielsweise pro Winkelgrad des Rotors ein Rotorlagesignal RL abgegeben wird, und pro Rotorlagesignal zwei rotorlageabhängige Signale $K_R^1$, $K_S^1$ (die hochgestellte Zahl kennzeichnet das rotorlageabhängige Signal für den jeweiligen Winkelgrad) ausgelöst werden sollen, so müßte der Speichers S über 720 Speicherplätze verfügen.

Die rotorlageabhängigen Signale $K_R^1$, $K_S^1$ gelangen an die Eingänge E4 und E6 der Verknüpfer VK1 und VK2. In den Verknüpfern VK1 und VK2 wird die Drehmomentregelgröße $M^S$ mit den rotorlageabhängigen Signalen $K_R^1$ bzw. $K_S^1$ verknüpft und die Stromsollwerte $I_R^S$ bzw. $I_S^S$ als Ergebnis der Verknüpfung an die Datenausgänge D1 bzw. D2 der Verknüpfungseinheit VE gelegt.

Im Ausführungsbeispiel sei angenommen, daß die Verknüpfung multiplikativ erfolge. Je nachdem, ob die Drehmomentregelgröße $M^S$ und/oder die rotorlageabhängigen Signale $K_R^1$, $K_S^1$ in analoger oder digitaler Form vorliegen, kann die multiplikative Verknüpfung digital oder analog durchgeführt werden. Falls die Drehmomentregelgröße $M^S$ in analoger Form vorliegt, und die rotorlageabhängigen Konstanten $K_R^1$, $K_S^1$ in digitaler Form vorliegen, kann auf einen Analog-Digital-Multiplizierer zurückgegriffen werden. Falls die Stromsollwerte $I_R^S$ $I_S^S$ in analoger Form an den Datenausgängen D1 bzw. D2 der Verknüpfungseinheit VE vorliegen sollen, können als Verknüpfer VK1, VK2 multiplizierende Digital-Analog-Wandler verwendet werden. Auch diese Digital-Analog-Wandler können an ihren Eingängen anliegende, digitale und analoge Größen miteinander verknüpfen.

Die Verknüpfungseinheit VE ist nicht an die in FIG 1 dargestellte Ausführungsform mit einem Speicher S und zwei Verknüpfern VK1 und VK2 gebunden. Die Verknüpfungseinheit VE könnte ebenso ein Modul innerhalb eines Betriebsprogrammes eines Steuerungssystems darstellen. Sie könnte auch lediglich als Speicherbaustein ausgeführt sein, dessen Adressierung über die in digitaler Form vorliegende Drehmomentregelgröße $M^S$ und über die Rotorlagesignale RL vorgenommen wird und in dessen Speicherplätzen die vorbestimmten Stromsollwerte $I_R^S$, $I_S^S$ für jede zu regelnde Phase abgelegt sind.

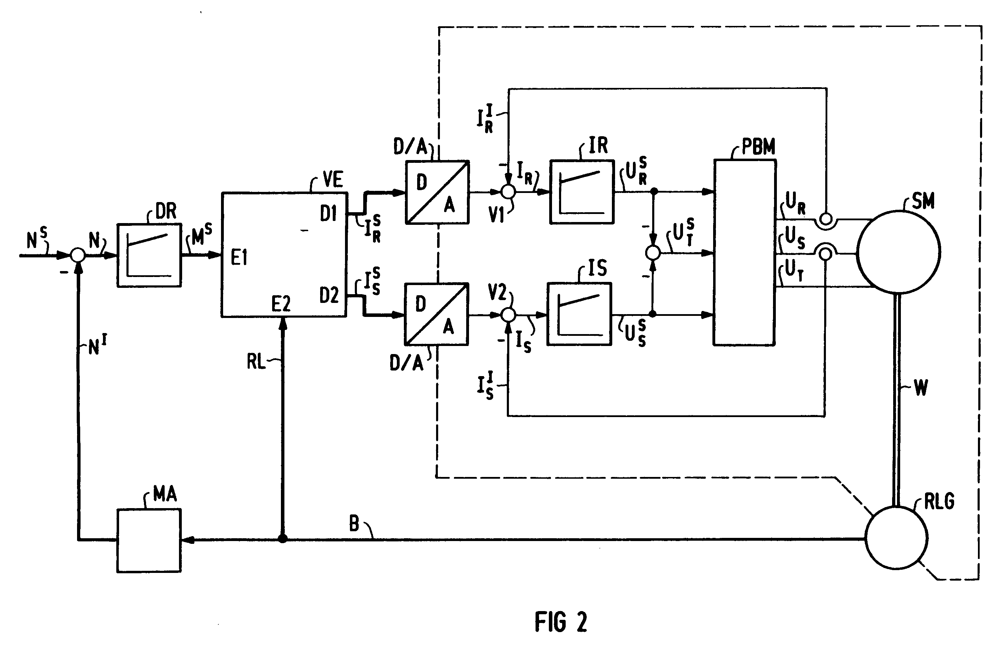

FIG 2 zeigt ein Blockschaltbild zur Regelung eines Synchronmotors SM. Der Signalfluß zwischen den einzelnen Blöcken ist durch mit Pfeilen versehene Wirkungslinien symbolisiert. Die dick ausgeführten Wirkungslinien stellen sogenannte Bussysteme dar. Die Breite dieser Bussysteme, d.h. die Anzahl der verwendeten Leitungen pro Datenbus B kann entsprechend den verwendeten Digitalbausteinen bzw. der gewünschten Meß- und Regelgenauigkeit angepaßt werden.

Der gesamte Regelkreis besteht aus einem Drehzahlregler DR, der Verknpüfungseinheit VE, zwei Digital-Analog-Wandlern D/A, zwei Stromreglern IR und IS, einem Pulsbreitenmodulator PBM, dem Synchronmotor SM, einem Rotorlagegeber RLG der über eine Welle W mit dem Rotor des Synchronmotors SM verbunden ist, sowie aus einer Meßwertaufbereitung MA.

Der Drehzahlregler DR sowie die Stromregler IR und IS sind in diesem Ausführungsbeispiel durch ihre Übertragungsfunktion als PI-Regler gekennzeichnet.

Der Analogteil des Regelkreises ist durch ein gestricheltes Rechteck eingefaßt. Er beginnt in Richtung des Signalflusses am jeweiligen Analogausgang A der Digital-Analog-Wandler D/A. Dabei bleibt es selbstverständlich dem Fachmann überlassen, an welcher Stelle des Regelkreises er zur analogen Signalverarbeitung übergeht. Eine weitergehende digitale Signalverarbeitung ist mit heutigen Mitteln bereits möglich.

Die Verknüpfungseinheit VE verfügt über zwei Eingänge E1 und E2. Es sei angenommen, daß die Verknüpfungseinheit wie oben beschrieben als Speicher ausgeführt ist. Jede vorgebbare Kombination von Stromsollwerten $I_R^S$ und $I_S^S$ ist in nicht dargestellten Speicherplätzen mit der jeweils gleichen Adresse abgelegt. Eine jeweilige Adresse für einen Speicherplatz ist dabei aus den Signalen, die an den Eingängen E1 und E2 anliegen, zusammengesetzt. Die Anzahl der Signale die am Eingang E2 anliegt, hängt dabei vom Auflösungsvermögen des Rotorlagegebers RLG ab. Ebenso hängt die Anzahl der Signale die am Eingang E1 anliegt von der Breite eines Digitalwortes (= Anzahl der Signale logisch "Null" oder logisch "Eins" pro anliegendem Wert) am Ausgang des Drehzahlreglers D ab. Die Größe des jeweiligen Speicherplatzes für einen Stromsollwert $I_R^S$, $I_S^S$ kann der gewünschten Meß- bzw. Regelgenauigkeit angepaßt sein. Entsprechend dieser Genauigkeit müssen dann auch die verwendeten Digital-Analog-Wandler D/A ausgelegt werden.

Für die Steuerung mehrphasiger Synchronmaschinen, bei denen mehr als zwei Stromsollwerte $I_R^S$, $I_S^S$ vorgegeben werden müssen, muß die Verknüpfungseinheit VE natürlich für jeden weiteren vorzugebenden Stromsollwert einen weiteren Speicherplatz mit der jeweils gleichen Adresse E1 und E2 aufweisen.

Zur Steuerung des Synchronmotors SM wird dem Regelkreis eine Solldrehzahl $N^S$ vorgegeben. Die Differenz zwischen Solldrehzahl $N^S$ und Istdrehzahl $N^I$ der Synchronmaschine wird dem Drehzahlregler DR als Drehzahlregelgröße N vorgegeben. Der Drehzahlregler DR, der im Ausführungsbeispiel als PI-Regler ausgeführt ist, gibt über seinen Ausgang eine Drehzahlregelgröße $M^S$ an den Eingang E2 des Speichers S. Gleichzeitig liegt am Eingang E2 der Verknüpfungseinheit VE die digitale Information über die Rotorlage RL des Rotors der Synchronmaschine SM, vom Rotorlagegeber RLG der Synchronmaschine vor. Die Kombination der an den Eingängen E1 und E2 der Verknüpfungseinheit VE anliegenden Signale adressiert in der Verknüpfungseinheit VE zwei Speicherzellen, in denen die Stromsollwerte $I_R^S$ für die Phase R und $I_S^S$ für die Phase S als digitale Signale abgelegt sind.

Diese Stromsollwerte $I_R^S$, $I_S^S$ entsprechen also einerseits dem gewünschten, dem Solldrehmoment $M^S$ proportionalen Sollstrom, der zur Erzielung eines konstanten Drehmoments idealerweise benötigt wird, andererseits werden durch die zusätzliche Information aus der Rotorlage RL die nichtidealen konstruktiv bedingten Eigenschaften des Synchronmotors SM berücksichtigt, so daß je nach Stellung des Rotors ein gegenüber der Drehmomentregelgröße $M^S$ modifizierter Stromsollwert $I_R^S$, $I_S^S$ an die Datenausgänge D1 und D2 der Verknüpfungseinheit VE gegeben wird.

Damit liegen die Stromsollwerte $I_R^S$, $I_S^S$ an den Digitaleingängen D des jeweils zugeordneten Digital-Analog-Wandlers D/A an.

Im Ausführungsbeispiel wird der jeweilige Stromsollwert $I_R^S$, $I_S^S$ als analoger Stromsollwert (die Bezugszeichen $I_R^S$ und $I_S^S$ gelten sowohl für den digitalen Stromsollwert als auch für den analogen Stromsollwert) an den Analogausgang A des zugehörigen Digital-Analog-Wandlers D/A gelegt. Am Vergleicher V1 wird die Differenz zwischen dem analogen Stromsollwert $I_R^S$ und dem analogen Stromistwert $I_R^I$ gebildet und als Stromregelgröße $I_R$ an den Eingang des Stromreglers IR gegeben. Entsprechend wird am Vergleicher V2 die Differenz zwischen dem analogen Stromsollwert $I_S^S$ und dem analogen Stromistwert $I_S^I$ gebildet und als Stromregelgröße $I_S$ an den Eingang des Stromreglers IS für die Phase S gegeben.

Durch die Verwendung eines eigenen Stromreglers IR, IS pro geregelter Stromphase können im Gegensatz zu bisherigen regelungstechnischen Konzepten diese Phasenströme einzeln geregelt werden. Dadurch wird sichergestellt, daß der aufkommutierende Strom exakt den abkommutierenden Strom ablöst und somit keine systembedingten Drehmomenteinbrüche mehr auftreten.

Am Ausgang der Stromregler IR, IS, die im Ausführungsbeispiel als PI-Regler ausgebildet sind, liegen die geregelten Strangsollspannungen $U_R^S$ bzw. $U_S^S$ an. Da bei einem in Sternschaltung betriebenen Synchronmotor SM die Summe der drei Strangsollspannungen $U_R^S$, $U_T^S$, $U_S^S$ in jedem Augenblick gleich Null sein muß, kann die dritte Strangsollspannung $U_T^S$ aus den beiden am Ausgang der Stromregler IR, IS, anliegenden Strangsollspannungen $U_R^S$, $U_S^S$ gebildet werden. Die drei Strangsollspannungen $U_R^S$, $U_T^S$, $U_S^S$ werden dann an den Eingang des Pulsbreitenmodulators PBM gelegt. Im Pulsbreitenmodulator PBM werden aus den anliegenden Strangsollspannungen $U_R^S$, $U_T^S$, $U_S^S$ die pulsbreitenmodulierten Strangspannungen $U_R$, $U_S$ und $U_T$ erzeugt, mit denen die Synchronmaschine beaufschlagt wird.

Am Ausgang des Pulsbreitenmodulators PBM werden im Strang R sowie im Strang S die Stromistwerte $I_R^I$ sowie $I_S^I$ gemessen, die wie bereits beschrieben zur Bildung der Stromsollwerte $I_R$ sowie $I_S$ herangezogen werden.

Die Synchronmaschine SM ist über die Welle W mit dem Rotorlagegeber RLG verbunden. Der Rotorlagegeber RLG kann sich aber auch direkt am Rotor der Synchronmaschine SM befinden. Entsprechend er gewünschten Rundlaufqualität des Rotors der Synchronmaschine, kann ein Rotorlagegeber RLG mit unterschiedlicher Auflösung verwendet werden, beispielsweise könnte ein sogenannter Standard-RST-Rotorlagegeber für 1 Mikrometer-Lageregelfeinheit oder ein Geber mit 4 096 Strichen pro Umdrehung für 0,1 Mikrometer-Lageregelfeinheit verwendet werden. Bei Gebern mit höheren Strichzahlen können die Stromsollwerte $I_R^S$, $I_S^S$ feinstufiger vorgegeben werden als bei Verwendung von Standard-RST-Rotorlagegebern, was sich positiv auf den Rundlauf auswirkt.

Bei Verwendung eines höher auflösenden Rotorlagegebers können die am Rotorlagegeber RLG an den Datenbus B gegebenen Signale außer auf den Eingang E2 der Verknüpfungseinheit VE auch an den Eingang der Meßwertaufbereitung MA gegeben werden. Die Meßwertaufbereitung MA bildet aus der Rotorlage pro Zeiteinheit den Drehzahlistwert $N^I$, der zusammen mit dem Drehzahlsollwert $N^S$ für die Bildung der Drehzahlregelgröße N verwendet wird.

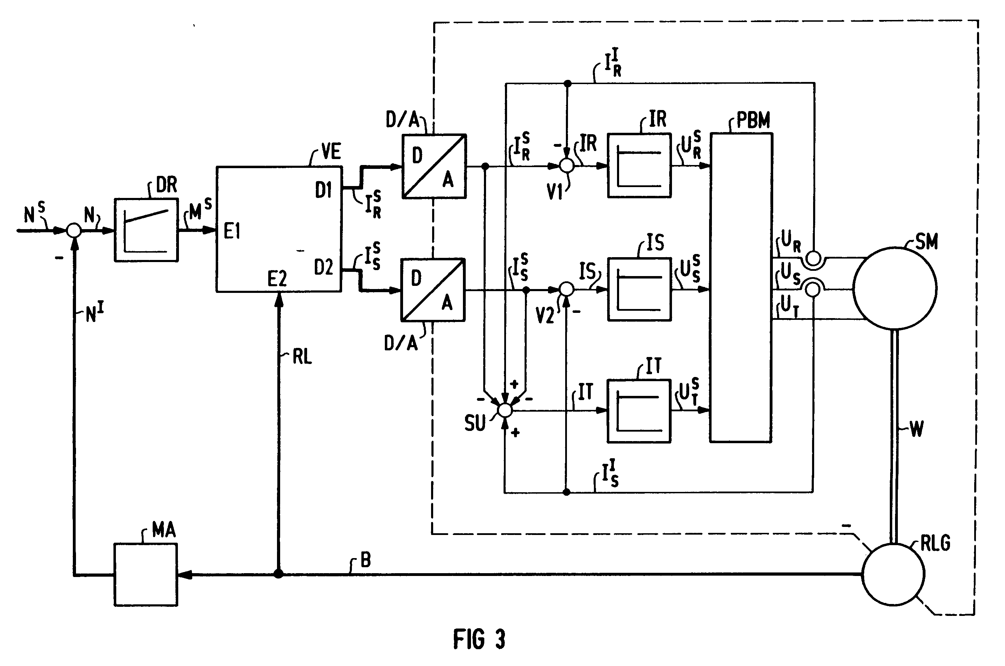

FIG 3 zeigt ein weiteres Blockschaltbild zur Regelung einer Synchronmaschine SM. Es unterscheidet sich von dem der FIG 2 dadurch, daß im analogen Teil des Regelkreises, der durch eine gestrichelte Linie eingerahmt ist, zusätzlich zu den Strangströmen $I_R$ bzw. $I_S$ am Ausgang der Vergleicher V1 bzw. V2 der dritte Strangstrom $I_T$ nach der Sternpunktbedingung (Summe aller Ströme = 0) gebildet wird. In FIG 2 werden dazu die am Ausgang des jeweiligen Digital-Analog-Wandlers D/A vorliegenden Stromsollwerte $I_R^S$ bzw. $I_S^S$ und die am Ausgang des Pulsbreitenmodulators PBM abgegriffenen Stromistwerte $I_R^I$ bzw. $I_S^I$ unter Berücksichtigung des Vorzeichens auf die entsprechenden Eingänge eines Summierers SU geführt, an dessen Ausgang dann der Strangstrom $I_T$ abgegriffen werden kann. Für jeden Strangstrom $I_R$, $I_S$, $I_T$ ist ein eigener Stromregler IR, IS, IT vorgesehen, der im Ausführungsbeispiel der FIG 3 als P-Regler mit Kompensation der elektromotorischen Kraft ausgeführt ist (Die Aufschaltung der elektromotorischen Kraft ist im Ausführungsbeispiel nicht gezeigt). Selbstverständlich könnte auch hier ein anderer Regler, beispielsweise ein Regler höherer Ordnung, verwendet werden.

Die weitere Verarbeitung der am Ausgang der Stromregler IR, IS, IT vorliegenden Signale - dies sind die Strangspannungen $U_R^S$, $U_S^S$, $U_T^S$ - ist bereits aus der Beschreibung der FIG 2 bekannt, so daß auf die Beschreibung dieses Abschnittes der Signalverarbeitung verzichtet werden kann.

**Patentansprüche**

1. Verfahren zur Regelung des Drehmomentverhaltens von mehrphasigen, elektronisch kommutierten Elektromotoren, insbesondere von Synchronmotoren (SM), mit Rotorlagegebern (RLG), wobei das Drehmoment des Elektromotors über mindestens einen vorgebbaren Stromsollwert ($I_R^S$,$I_S^S$) steuerbar ist, wobei ein jeweiliger Stromsollwert ($I_R^S$,$I_S^S$) aus einer Drehmomentregelgröße ($M^S$) abgeleitet wird, **gekennzeichnet** durch folgende Verfahrensschritte:

a) Für jede zu regelnde Stromphase wird ein rotorlageabhängiges Signal ($K_R^1$, $K_S^1$) zur Verfügung gestellt,

b) die jeweilige Drehmomentregelgröße ($M^S$) wird mit dem jeweiligen rotorlageabhängigen Signal ($K_R^1$,$K_S^1$) einer Stromphase verknüpft, wobei ein Stromsollwert ($I_R^S$,$I_S^S$) für jede Stromphase gebildet wird,

c) aus der Differenz zwischen dem jeweils vorliegenden Stromsollwert ($I_R^S$,$I_S^S$) und dem Stromistwert ($I_R^I$,$I_S^I$) wird eine Stromregelgröße ($I_R$, $I_S$) gebildet,

d) ein jeder Stromphase (R,S) zugeordneter Stromregler (IR, IS) erzeugt eine der jeweiligen Stromregelgröße ($I_R$,$I_S$) entsprechende Sollspannung ($U_R^S$,$U_S^S$), mit der der Elektromotor über einen Pulsbreitenmodulator (PBM) steuerbar ist,

e) wobei die rotorlageabhängigen Signale so gewählt sind, daß bei einer jeweiligen Rotorlage bestehende, fertigungstechnisch bedingte Abweichungen vom idealen Drehstromistwertverlauf kompensiert werden.

2. Verfahren nach Anspruch 1, **dadurch gekennzeichnet**, daß die rotorlageabhängigen Signale eine zusätzliche Komponente zur Vorgabe eines gewünschten Drehmomentsollwertverlaufs enthalten.

3. Verfahren nach einem der vorstehenden Ansprüche 1, **dadurch gekennzeichnet**, daß die rotorlageabhängigen Signale ($K_R^1$,$K_S^1$) in einem Speicher (S) hinterlegbar und durch Anlegen des aktuellen Rotorlagesignals (RL) an den Adreßeingang (SA) des Speichers (S) auslösbar sind.

4. Verfahren zur Regelung des Drehmomentverhaltens von mehrphasigen, elektronisch kommutierten Elektromotoren, insbesondere von Synchronmotoren (SM) mit Rotorlagegebern (RLG), wobei das Drehmoment eines Elektromotors über mindestens einen vorgebbaren Stromsollwert ($I_R^S$,$I_S^S$) steuerbar ist, wobei ein jeweiliger Stromsollwert ($I_R^S$,$I_S^S$) aus einer Drehmomentregelgröße ($M^S$) abgeleitet wird, **gekennzeichnet** durch folgende Verfahrensschritte:

a) Der einer jeweiligen Drehmomentregelgröße und der jeweiligen Rotorlage entsprechender Stromsollwert ($I_R^S$,$I_S^S$) wird für jede zur Regelung vorgesehene Phase jeweils als digitaler Stromsollwert ($I_R^S$,$I_S^S$) in einem Speicher abgelegt,

b) der jeweilige Stromsollwert ($I_R^S$,$I_S^S$) für die betreffende Phase wird durch Anlegen der Drehmomentregelgröße ($M^S$) sowie des aktuellen Rotorlagesignals (RL) an die Adreßeingänge eines Speichers ausgelöst und an den Digitaleingang (D) eines jeweiligen Digital-Analog-Wandlers (D/A) gegeben,

c) aus der Differenz zwischen dem jeweils vorliegenden Stromsollwert ($I_R^S$,$I_S^S$) und dem Stromistwert ($I_R^I$,$I_S^I$) wird eine Stromregelgröße ($I_R$,$I_S$) gebildet,

d) ein jeder Stromphase zugeordneter Stromregler (IR,IS) erzeugt eine der jeweiligen Stromregelgröße ($I_R$,$I_S$) entsprechende Sollspannung ($U_R^S$,$U_S^S$), mit der der Elektromotor über einen Pulsbreitenmodulator (PBM) steuerbar ist,

e) wobei die rotorlageabhängigen Signale so gewählt sind, daß bei einer jeweiligen Rotorlage bestehende, fertigungstechnisch bedingte Abweichungen vom idealen Drehstromistwertverlauf kompensiert werden.

5. Verfahren nach einem der vorstehenden Ansprüche, **dadurch gekennzeichnet**, daß zur Regelung eines dreiphasigen Elektromotors eine Sollspannung ($U_T^S$) aus den beiden anderen Sollspannungen ($U_R^S, U_S^S$) nach der Sternpunktbedingung gebildet wird.

6. Verfahren nach einem dem vorstehenden Ansprüche, **dadurch gekennzeichnet**, daß zur Regelung eines dreiphasigen Elektromotors die dritte Stromregelgröße ($I_T$) aus den jeweils vorliegenden analogen Stromsollwerten ($I_R^S, I_S^S$) und aus den Stromistwerten ($I_R^I, I_S^I$) nach der Sternpunktbedingung gebildet wird.

**Claims**

1. Method for controlling the torque behaviour of multi-phase, electronically commutated electric motors, in particular of synchronous motors (SM), having rotor position encoders (RLG), wherein the torque of the electric motor can be controlled by way of at least one specifiable desired current value ($I_R^S, I_S^S$), wherein a respective desired current value ($I_R^S, I_S^S$) is derived from a torque controlled variable ($M^S$), characterized by the following procedural steps:

   a) a rotor-position-dependent signal ($K_R^1, K_S^1$) is made available for each current phase to be controlled,

   b) the respective torque controlled variable ($M^S$) is linked to the respective rotor-position signal ($K_R^1, K_S^1$) of a current phase which is dependent on the rotor position, with a desired current value ($I_R^S, I_S^S$) being formed for each current phase,

   c) a current controlled variable ($I_R, I_S$) is formed from the difference between the respectively existing desired current value ($I_R^S, I_S^S$) and the actual current value ($I_R^I, I_S^I$),

   d) a current controller (IR,IS) associated with each current phase (R,S) generates a desired voltage ($U_R^S, U_S^S$) corresponding to the respective current controlled variable ($I_R, I_S$), with which desired voltage the electric motor can be controlled by way of a pulse-width modulator (PBM),

   e) wherein the rotor-position-dependent signals are selected in such a way that deviations from the ideal actual three-phase current value characteristic existing with a respective rotor position and caused by manufacturing engineering are compensated for.

2. Method according to claim 1, characterized in that the rotor-position-dependent signals contain an additional component for the specification of a desired torque value characteristic.

3. Method according to one of the preceding claims, characterized in that the rotor-position-dependent signals ($K_R^1, K_S^1$) can be deposited in a memory (S) and can be released through the application of the actual rotor-position signal (RL) to the address input (SA) of the memory (S).

4. Method for controlling the torque behaviour of multi-phase, electronically commutated electric motors, in particular of synchronous motors (SM), having rotor position encoders (RLG), wherein the torque of an electric motor can be controlled by way of at least one specifiable desired current value ($I_R^S, I_S^S$), wherein a respective desired current value ($I_R^S, I_S^S$) is derived from a torque controlled variable ($M^S$), characterized by the following procedural steps:

   a) the desired current value ($I_R^S, I_S^S$) corresponding to a respective torque controlled variable and the respective rotor position is deposited in a memory for each phase provided for the control in each case as a digital desired current value ($I_R^S, I_S^S$),

   b) the respective desired current value ($I_R^S, I_S^S$) for the relevant phase is released through the application of the torque controlled variable ($M^S$) and the actual rotor-position signal (RL) to the address inputs of a memory and is given to the digital input (D) of a respective digital-to-analog converter (D/A),

   c) from the difference between the respectively existing desired current value ($I_R^S, I_S^S$) and the actual current value ($I_R^I, I_S^I$) a current controlled variable ($I_R, I_S$) is formed,

   d) a current controller (IR,IS) associated with each current phase generates a desired voltage ($U_R^S, U_S^S$) corresponding to the respective current controlled variable ($I_R, I_S$), with which desired voltage the electric motor can be controlled by way of a pulse-width modulator (PBM),

   e) with the rotor-position-dependent signals being selected in such a way that deviations from the ideal actual three-phase current value characteristic existing with a respective rotor position and caused by manufacturing engineering are compensated for.

5. Method according to one of the preceding claims, characterized in that to control a three-phase electric motor a desired voltage ($U_T^S$) is formed from the two other desired voltages ($U_R^S, U_S^S$) according to the star-point condition.

6. Method according to one of the preceding claims, characterized in that to control a three-phase electric motor the third current controlled variable ($I_T$) is formed from the respectively existing analog desired current values ($I_R^S, I_S^S$) and from the actual current values ($I_R^I, I_S^I$) according to the star-point condition.

## Revendications

1. Procédé pour régler le comportement du couple de moteurs électriques polyphasés à commutation électronique, notamment de moteurs synchrones (SM), comportant des capteurs (RLG) de la position du rotor, selon lequel le couple du moteur électrique peut être commandé par l'intermédiaire d'au moins une valeur de consigne du courant ($I_R^S, I_S^S$) pouvant être prédéterminée, une valeur de consigne respective du courant ($I_R^S, I_S^S$) pouvant être dérivée d'une grandeur ($M^S$) de régulation du couple, caractérisé par les étapes opératoires suivantes :
   a) un signal ($K_R^1, K_S^1$), qui dépend de la position du rotor, est délivré pour chaque phase réglée du courant,
   b) la grandeur ($M^S$) de régulation du couple est combinée au signal respectif ($K_R^1, K_S^1$) qui dépend de la position du rotor, d'une phase du courant, une valeur de consigne ($I_R^S, I_S^S$) du courant étant formée pour chaque phase du courant,
   c) une grandeur ($I_R, I_S$) de régulation du courant est formée à partir de la différence entre la valeur de consigne respectivement présente ($I_R^S, I_S^S$) du courant et la valeur réelle ($I_R^I, I_S^I$) du courant,
   d) un régulateur de courant (IR,IS), qui est associé à chaque phase de courant (R,S), produit une tension de consigne ($U_R^S, U_S^S$), qui correspond à la grandeur respective ($I_R, I_S$) de réglage du courant et au moyen de laquelle le moteur électrique peut être commandé par l'intermédiaire d'un modulateur d'impulsions en durée (PBM),
   e) les signaux, qui dépendent de la position du rotor, étant choisis de telle sorte que sont compensés des écarts, qui existent pour une position respective du rotor et qui sont conditionnés par la technique de fabrication, par rapport à l'allure idéale de la valeur réelle du courant.

2. Procédé suivant la revendication 1, caractérisé par le fait que les signaux, qui dépendent de la position du rotor, contiennent une composante supplémentaire servant à prédéterminer une allure désirée de la valeur de consigne du couple.

3. Procédé suivant l'une des revendications précédentes, caractérisé par le fait que les signaux ($K_R^1, K_S^1$), qui dépendent de la position du rotor, peuvent être mémorisés dans une mémoire (S) et peuvent être déclenchés par l'application du signal actuel (RL) de la position du rotor à l'entrée d'adresse (SA) de la mémoire (S).

4. Procédé pour régler le comportement du couple de moteurs électriques polyphasés à commutation électronique, notamment de moteurs synchrones (SM), comportant des capteurs (RLG) de la position du rotor, selon lequel le couple du moteur électrique peut être commandé par l'intermédiaire d'au moins une valeur de consigne du courant ($I_R^S, I_S^S$) pouvant être prédéterminée, une valeur de consigne respective du courant ($I_R^S, I_S^S$) pouvant être dérivée d'une grandeur ($M^S$) de régulation du couple, caractérisé par les étapes opératoires suivantes :
   a) la valeur de consigne ($I_R^S, I_S^S$) du courant, qui correspond à la grandeur respective de régulation du couple et à la position respective du rotor, est mémorisée dans une mémoire, respectivement en tant que valeur de consigne numérique ($I_R^S, I_S^S$) du courant, pour chaque phase prévue pour la régulation,
   b) la valeur de consigne respective ($I_R^S, I_S^S$) du courant pour la phase considérée est déclenchée par application d'une grandeur de ($M^S$) de régulation du couple ainsi que du signal actuel (RL) de la position du rotor, aux entrées d'adresses d'une mémoire et est appliquée à l'entrée numérique (D) d'un convertisseur numérique/analogique respectif (D/A),
   c) une grandeur ($I_R, I_S$) réglée du courant est formée à partir de la différence entre la valeur de consigne respectivement présente ($I_R^S, I_S^S$) du courant et la valeur réelle ($I_R^I, I_S^I$) du courant,
   d) un régulateur de courant (IR,IS), qui est associé à chaque phase de courant (R,S), produit une tension de consigne ($U_R^S, U_S^S$), qui correspond à la grandeur respective ($I_R, I_S$) réglée du courant et au moyen de laquelle le moteur électrique peut être commandé par l'intermédiaire d'un modulateur d'impulsions en durée (PBM),
e) les signaux, qui dépendent de la position du rotor, étant choisis de telle sorte que sont compensés des écarts, qui existent pour une position respective du rotor et qui sont dus à la technique de fabrication, par rapport à la courbe idéale de la valeur réelle du courant.

5. Procédé suivant l'une des revendications précédentes, caractérisé en ce que l'on forme, pour régler un moteur électrique triphasé, une tension ($U_T^S$), à partir des deux autres tensions ($U_R^S, U_S^S$) de consigne, selon la condition du neutre.

6. Procédé suivant l'une des revendications précédentes, caractérisé par le fait que pour la régulation d'un moteur électrique triphasé, la troisième grandeur ($I_T$) réglée du courant est formée à partir des valeurs analogiques respectivement présentes de consigne ($I_R^S, I_S^S$) du courant et à partir des valeurs réelles ($I_R^I, I_S^I$) du courant, selon la condition du neutre.

FIG 1

FIG 2

FIG 3